# EUROPEAN PATENT APPLICATION

(11) **EP 3 933 563 A1**
(43) Date of publication of application: **05.01.2022**
(21) Application number: 20763258.9
(22) Date of filing: 03.02.2020
(51) Int. Cl.: G06F 3/0484

(54) **INTERACTIVE CONTENT DISPLAY METHOD AND APPARATUS, ELECTRONIC DEVICE AND STORAGE MEDIUM**

(30) Priority: 26.02.2019 CN 201910142208
(71) Applicant: Beijing Dajia Internet Information Technology Co., Ltd., Beijing 100085 (CN)
(72) Inventor: MIAO, Huayun, Beijing 100085 (CN)
(74) Representative: Mathys & Squire
(86) International application number: PCT/CN2020/074230
(87) International publication number: WO 2020/173284

(57) **Abstract**

Disclosed are an interactive content display method and apparatus, an electronic device and a storage medium, belonging to the technical field of the Internet. The method includes: receiving operation instructions for different preset function display interfaces from a user, wherein preset functions are used to perform feedback on a creator or a creation content of the creator; determining, based on the operation instructions, a preset function corresponding to a selected operation instruction; acquiring an interactive content corresponding to the determined preset function, wherein the interactive content is used to show the feedback made by the creator for the different preset functions; and displaying the interactive content. The provided interactive content display method enables the user to intuitively feel, in real time, the feedback made by the creator due to a user operation, and thus can improve the real-time interactive effect between the user and the creator, thereby improving the real-time interactive experience of the user.

## Description

### Cross-Reference to Related Applications

The present disclosure claims the priority of the Chinese patent application No.201910142208.X filed to China National Intellectual Property Administration on February 26, 2019, and entitled "INTERACTIVE CONTENT DISPLAY METHOD AND APPARATUS, ELECTRONIC DEVICE AND STORAGE MEDIUM", of which the entire contents are incorporated herein by reference.

### Field

The present disclosure relates to the field of Internet technology, in particular to a method and an apparatus for displaying interactive content, an electronic device and a storage medium.

### Background

Mobile social gradually occupies the daily life of people nowadays, and therefore more and more real-time social applications, such as various types of live video software, emerge explosively. The real-time social applications enable a user to have a feeling of going to the site personally, thereby greatly improving attractiveness to the user. Therefore, some non-real-time social applications hope to improve the attractiveness to the user in a real-time interaction simulating mode as well.

In the related art, for some non-real-time social applications, after the user triggers a certain operation through an electronic device with the application installed, the application displays the change of a user interface (UI) and an animation effect in real time according to the user operation, so that the user senses that a function corresponding to the operation is successfully achieved. For example, for relevant picture and short video sharing applications, after the user triggers an operation of giving a like to a creator, the UI of the operation will pop up a thumbs-up, so that the user knows that the like has been given to the creator.

However, the inventor found that the interactive mode is only limited to interaction between the user and the device and does not enable the user to interact with the creator, as a consequence, a problem of poor real-time interactive effect still exists, which influences real-time interactive experience of the user.

### Summary

In order to overcome a problem existing in the related art, the present disclosure provides a method and an apparatus for displaying interactive content, an electronic device and a storage medium, so as to improve a real-time interactive experience of a user.

According to a first aspect of an embodiment of the present disclosure, a method for displaying interactive content is provided, applied to an electronic device, and includes:
receiving an operation instruction for a display interface with different preset functions, wherein the preset functions are used to perform feedback on a creator or creation content of the creator;
determining, based on the operation instruction, the preset function corresponding to the operation instruction;
acquiring interactive content corresponding to the determined preset function, wherein the interactive content is used to show the feedback from the creator for the different preset functions; and
displaying the interactive content.

According to a second aspect of an embodiment of the present disclosure, a method for displaying interactive content is provided, applied to a server, and includes:
receiving an acquiring request for interactive content, wherein the interactive content is used to show feedback from a creator for different preset functions, and the preset functions are used to perform the feedback on the creator or creation content of the creator; and
sending the interactive content corresponding to the preset function.

According to a third aspect of an embodiment of the present disclosure, an apparatus for displaying interactive content is provided, applied to an electronic device, and includes:
a first receiving module, configured to receive an operation instruction for a display interface with different preset functions, wherein the preset functions are used to perform feedback on a creator or creation content of the creator;
a first determining module, configured to determine, based on the operation instruction, the preset function corresponding to the operation instruction;
an acquiring module, configured to acquire interactive content corresponding to the determined preset function, wherein the interactive content is used to show the feedback from the creator for the different preset functions; and
a display module, configured to display the interactive content.

According to a fourth aspect of an embodiment of the present disclosure, an apparatus for displaying interactive content is provided, applied to a server, and includes:
a second receiving module, configured to receive an acquiring request for interactive content, wherein the interactive content is used to show feedback from a creator for different preset functions, and the preset functions are used to perform the feedback on the creator or creation content of the creator; and
a second sending module, configured to send the interactive content corresponding to the preset function.

According to a fifth aspect of an embodiment of the present disclosure, an electronic device is provided, and includes:
a processor; and
a memory used to store instructions executable by the processor; wherein
the processor is configured to execute the instructions to:
   receive an operation instruction for a display interface with different preset functions, wherein the preset functions are used to perform feedback on a creator or creation content of the creator;
   determine, based on the operation instruction, the preset function corresponding to the operation instruction;
   acquire interactive content corresponding to the determined preset function, wherein the interactive content is used to show the feedback from the creator for the different preset functions; and
   display the interactive content.

According to a sixth aspect of an embodiment of the present disclosure, an electronic device is provided, and includes:
a processor; and
a memory used to store instructions executable by the processor; wherein
the processor is configured to execute the instructions to:
   receive an acquiring request for interactive content, wherein the interactive content is used to show feedback from a creator for different preset functions, and the preset functions are used to perform the feedback on the creator or creation content of the creator; and
   send the interactive content corresponding to the preset function.

According to a seventh aspect of an embodiment of the present disclosure, a non-transitory computer readable storage medium is provided. When executed by a processor of a mobile terminal, an instruction in the storage medium enables the mobile terminal to execute the method for displaying the interactive content provided by the first aspect of the embodiment of the present disclosure.

According to an eighth aspect of an embodiment of the present disclosure, a non-transitory computer readable storage medium is provided. When executed by a processor of a mobile terminal, an instruction in the storage medium enables the mobile terminal to execute the method for displaying the interactive content provided by the second aspect of the embodiment of the present disclosure.

According to a ninth aspect of an embodiment of the present disclosure, a computer program product is provided to enable a computer to execute the method for displaying the interactive content provided by the first aspect of the embodiment of the present disclosure.

According to a tenth aspect of an embodiment of the present disclosure, a computer program product is provided to enable a computer to execute the method for displaying the interactive content provided by the second aspect of the embodiment of the present disclosure.

The technical solutions provided by the embodiments of the present disclosure may include the following beneficial effects: after receiving the operation instruction for the display interface with different preset functions from the user, the electronic device can acquire the interactive content corresponding to the preset function. The interactive content can show the feedback from the creator to the preset function, and the interactive content is further displayed, so that the user intuitively feels, in real time, the feedback from the creator due to a user operation, thereby improving the real-time interactive effect between the user and the creator, and improving the real-time interactive experience of the user.

It should be understood that the above general description and the following detailed description are only exemplary and explanatory and cannot limit the present disclosure.

### Brief Description of the Drawings

Accompanying drawings here, which are incorporated in and constitute a part of this specification, illustrate embodiments consistent with the present disclosure and, together with the specification, serve to explain principles of the present disclosure.
FIG. 1 is a flow chart of a method for displaying interactive content shown according to an exemplary embodiment.
FIG. 2 is a schematic diagram of a display interface of an electronic device shown according to an exemplary embodiment.
FIG. 3 is a flow chart of another method for displaying interactive content shown according to an exemplary embodiment.
FIG. 4 is a flow chart of yet another method for displaying interactive content shown according to an exemplary embodiment.
FIG. 5 is a block diagram of an apparatus for displaying interactive content shown according to an exemplary embodiment.
FIG. 6 is a block diagram of another apparatus for displaying interactive content shown according to an exemplary embodiment.
FIG. 7 is a block diagram of yet another apparatus for displaying interactive content shown according to an exemplary embodiment.
FIG. 8 is a block diagram of a fourth apparatus for displaying interactive content shown according to an exemplary embodiment.
FIG. 9 is a block diagram of an apparatus for displaying interactive content shown according to an exemplary embodiment.
FIG. 10 is a block diagram of another apparatus for displaying interactive content shown according to an exemplary embodiment.

### Detailed Description of the Embodiments

The exemplary embodiments will be illustrated in detail here with their examples shown in the accompanying drawings. When the following description relates to the accompanying drawings, unless otherwise indicated, the same number in the different accompanying drawings represent the same or similar elements. The implementations described in the following exemplary embodiments do not represent all the implementations consistent with the present disclosure. On the contrary, they are only the examples of the apparatuses and the methods consistent with some aspects of the present disclosure and as detailed in the appended claims.

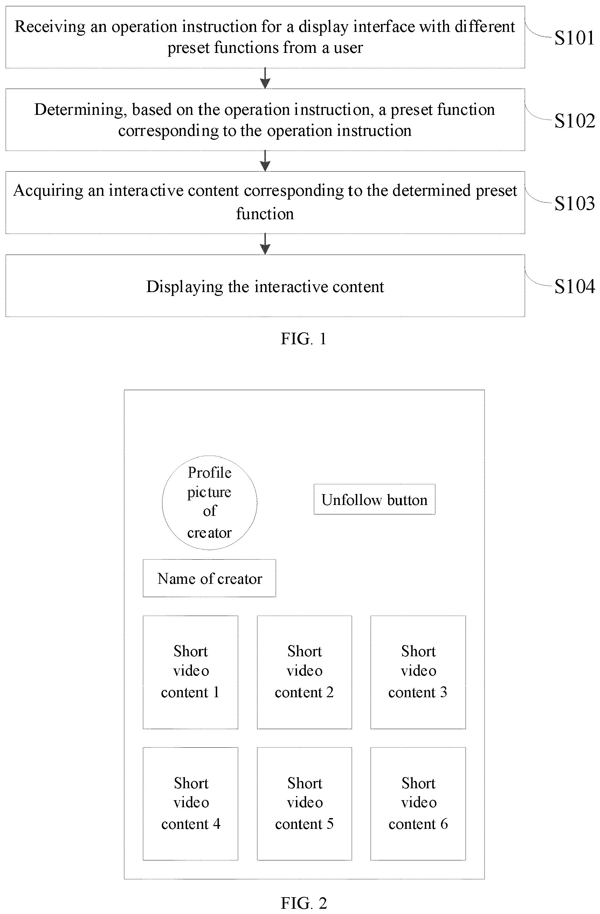

FIG. 1 is a flow chart of a method for displaying interactive content shown according to an exemplary embodiment. As shown in FIG. 1, the method for displaying the interactive content may be used in an electronic device, and includes the following steps.

S101, an operation instruction for a display interface with different preset functions are received.

In the embodiment of the present disclosure, the electronic device may be installed with non-real-time social applications, such as picture and short video sharing applications. Different functional components are preset in these non-real-time social applications and configured to achieve different preset functions. The above preset functions are used to perform feedback on a creator or creation content of the creator. Optionally, these preset functions may include any combination of the following: following the creator, unfollowing the creator, expressing admiration to the creator, expressing admiration to the creation content of the creator, or commenting the creation content of the creator, etc.

It may be understood that a display element of the electronic device may display a display interface containing the above preset functions, and therefore, a user may perform corresponding operations for the different preset functions. For example, when hoping to achieve a function of following a creator of a short video, the user can click a "follow" button, and thus the electronic device can receive a click operation instruction. When hoping to achieve a function of expressing admiration to the creation content of the creator, the user can click a "like" button, and thus the electronic device can receive a click operation instruction.

The above preset functions may be preset in the non-real-time social applications, or may also be obtained by the non-real-time social applications from background update in a process that the user uses the non-real-time social applications.

S102, based on the operation instruction, the preset function corresponding to the operation instruction is determined.

After the electronic device receives the click operation instruction, a region, where the click operation is located, in the display interface may be determined, so that the preset function corresponding to the region in the display interface is easily determined, that is, the preset function corresponding to the operation instruction is determined.

Exemplarily, after the electronic device receives the click operation instruction for the "follow" button, whether a click point is located in the region, where the "follow" button is located, in display interface may be determined. If the click point is located in the display region where the "follow" button is located, it may be determined that the click operation is used to achieve the preset function of following the creator. Accordingly, a state of the "follow" button may be changed from unfollowed into followed, so that the user knows that the creator has been successfully followed.

S103, interactive content corresponding to the determined preset function is acquired.

After determining the preset function selected by the user, the electronic device can acquire the interactive content corresponding to the preset function. In the embodiment of the present disclosure, the interactive content may be used to show feedback from the creator for the different preset functions. In other words, the interactive content may express mood of the creator for the different preset functions. Optionally, these interactive content may include any combination of the following: a short video, a dynamic picture, a static picture or an audio content, for example, a short video, a dynamic picture and a static picture containing expression and/or motion of the creator, or the audio content containing voice of the creator, or emoji emoticon containing cry, laugh, happy, spoof or sad.

Exemplarily, after the user click the "follow" button, the electronic device may determine that the preset function selected by the user is to follow the creator, and the electronic device may acquire a short video containing a happily laugh image of the creator. Therefore, after watching the short video, the user feels that the creator makes a happy response due to be followed by the user, and has a feeling of being in real-time interaction with the creator.

Exemplarily, after the user click the "unfollow" button, the electronic device may determine that the preset function selected by the user is to unfollow the creator, and the electronic device may acquire a graphics interchange format (GIF) picture containing a spoofy picture that the creator is sad and reluctant to part with the user. Therefore, after seeing the GIF picture, the user feels that the creator is sad due to be unfollowed and has a feeling of being in real-time interaction with the creator. In this way, the user can feel the meaning of a current operation to the creator the first time, the user has close interaction and communication with the creator the first time, and a real and real-time social experience is given to the user.

As an optional implementation of the embodiment of the present disclosure, the creator may also upload the different interactive content to a server for the different preset functions in advance. For example, for the preset function of following the creator, the creator may upload the short video of happily laugh; for the preset function of unfollowing, the creator may upload a dynamic picture of being sad and crying; and for the preset function of expressing admiration to the creator, the creator may upload the audio content of words of thanks.

After the user selects the corresponding preset function, the electronic device may acquire the interactive content uploaded by the creator and corresponding to the preset function from the server, thus the different moods of the creator are expressed more advantageously, and the user has a more realistic interaction feeling with the creator. Certainly, the electronic device may also locally store the interactive content uploaded by the creator and corresponding to the preset function in advance so as to acquire interactive content locally.

S104, the interactive content is displayed.

After the electronic device acquires the interactive content, the interactive content may be displayed to the user through the display element. For example, the short video containing the happily laugh picture of the creator is displayed to the user, or the GIF picture containing the sad or crying picture of the creator is displayed to the user, or the audio content of the words of thanks from the creator is played through a speaker.

The non-real-time social applications generally can display a profile picture of the creator in the display interface, as shown in FIG. 2, which is a schematic diagram of the display interface in the electronic device in one embodiment of the present disclosure. The diagram includes display regions such as the profile picture of the creator, a name of the creator, the short videos shared by the creator, and the unfollow button. As an optional implementation of the embodiment of the present disclosure, the electronic device may display the interactive content to the user at a current UI. Optionally, the electronic device may further display the interactive content to the user at the profile picture of the creator in the current UI. For example, after the user clicks the "unfollow" button, the profile picture of the creator is immediately changed from original smile to cry, thus the expression change of the creator can be expressed intuitively, so that the user has the more realistic interactive feeling, thereby improving the user experience.

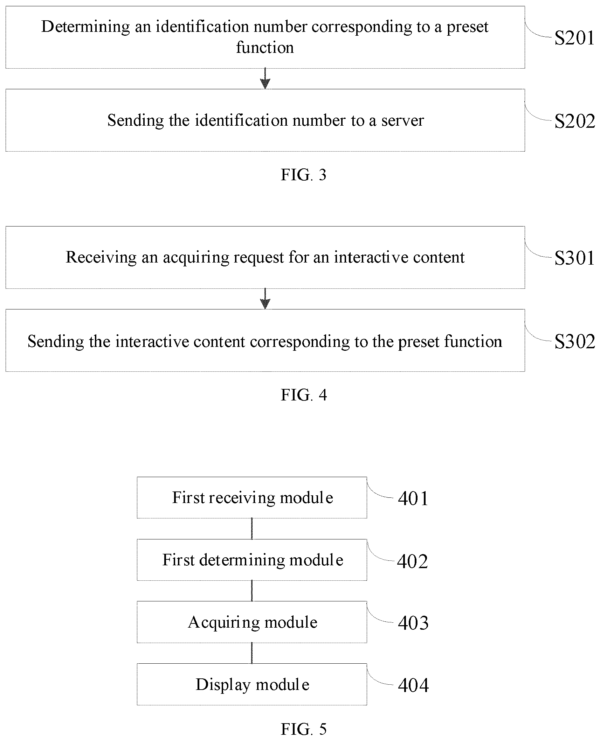

As an optional implementation of the embodiment of the present disclosure, after S102, as shown in FIG. 3, the method for displaying the interactive content of the embodiment of the present disclosure may further includes the following steps.

S201, an identification number corresponding to the preset function is determined.

One identification number may be set for one preset function. For example, for the preset function of following the creator, the identification number is set to be 1; for the preset function of unfollowing the creator, the identification number is set to be 2; and the rest can be done in the same manner. That is to say, in the embodiment of the present disclosure, the respective preset functions are allocated the respective identifications for recognizing each preset function, so that the electronic device and the server can recognize the different preset functions.

S202, the identification number is sent to the server.

This step may be conducted before S103. After determining the identification number corresponding to the preset function, the electronic device may send the identification number to the server, so that the server searches the interactive content corresponding to the identification number, and returns the searched interactive content to the electronic device.

The method for displaying the interactive content provided by the embodiment of the present disclosure feeds back the real feeling of the creator in real time in response to the current operation of the user, enables the user to experience, in the non-real-time social applications, real-time interactive pleasure only experienced in the real-time social application, and enables the user to really see the body motion of the creator through the interactive content, such as the video, uploaded by the creator; to feel the mood and feeling of the creator at the moment through the interactive content, such as the picture and the GIF expression, uploaded by the creator; and to hear the words from the heart of the creator and spoken to the user through the interactive content, such as the audio, uploaded by the creator, thereby improving real-time communication and interaction between the creator and the user, and improving entertainment and playability of the non-real-time social applications. In actual application, in order to acquire traffic and retain the user, the creator may be motivated to create more creative works to meet curiosity of the user. The user may follow the creator due to the creative content of the creator more possibly, and refollow the creator due to the interesting and funny creative content of the creator during unfollowing more possibly, thereby improving user viscosity.

According to the method for displaying the interactive content provided by the embodiment of the present disclosure, after the electronic device receives the operation instruction for the display interface with the different preset functions from the user, the interactive content corresponding to the preset function can be acquired, the interactive content may show the feedback from the creator for the different preset functions, the interactive content is further displayed, so that the user intuitively feels, in real time, the feedback from the creator due to the user operation, thereby improving the real-time interactive effect between the user and the creator, and improving the real-time interactive experience of the user.

An embodiment of the present disclosure further provides a method for displaying interactive content. FIG. 4 is a flow chart of the method for displaying the interactive content shown according to an exemplary embodiment. As shown in FIG. 4, the method for displaying the interactive content may be applied to a server, and includes the following steps.

S301, an acquiring request for interactive content is received.

The server may receive the acquiring request for the interactive content sent by the electronic device, so as to search the interactive content corresponding to a preset function, that is, the interactive content needed to be acquired by the electronic device. The interactive content is configured to show feedback from a creator for the different preset functions. Optionally, the interactive content may include any combination of the followings: a short video, a dynamic picture, a static picture or an audio content. The preset functions are used to perform the feedback on the creator or creation content of the creator. Optionally, the preset functions include any combination of the following: following the creator, unfollowing the creator, expressing admiration to the creator, expressing admiration to the creation content of the creator, or commenting the creation content of the creator.

As an optional implementation of the embodiment of the present disclosure, the acquiring request for the interactive content may carry an identification number, and the identification numbers are used to distinguish the different preset functions, so that the server may search the corresponding interactive content according to the identification number carried in the acquiring request.

S302, the interactive content corresponding to the preset function is returned.

After the server searches the interactive content corresponding to the preset function, the interactive content may be sent to the electronic device, so that the electronic device displays the interactive content. The interactive content corresponding to the preset function mentioned here may refer to the interactive content corresponding to the identification number of the preset function.

As an optional implementation of the embodiment of the present disclosure, the server may store the interactive content for the different preset functions in advance, that is, the server may establish a corresponding relation between the different interactive content and the different preset functions and then store.

As an optional implementation of the embodiment of the present disclosure, the server may further establish a corresponding relation between the various types of interactive content and the identification numbers corresponding to the different preset functions in advance and then store. For example, for the preset function of following the creator, the identification number is 1, and the server may establish a corresponding relation between a first interactive content with the identification number 1 and then store the first interactive content; and for the preset function of unfollowing the creator, the identification number is 2, and the server may establish a corresponding relation between a second interactive content with the identification number 2 and then store the second interactive content.

Therefore, when the server searches the interactive content, the server only needs to search according to the received identification number. On the one hand, the server can quickly search a target interactive content, thereby improving a searching efficiency. On the other hand, the accuracy during interactive content searching is improved.

As an optional implementation of the embodiment of the present disclosure, the server may store the interactive content uploaded by the creator in advance. The creator may upload the different interactive content to the server in advance for the different preset functions. For example, for the preset function of following the creator, the creator may upload a short video of happily laughing; for the preset function of unfollowing, the creator may upload a dynamic picture of being sad and crying; and for the preset function of expressing admiration to the creator, the creator may upload an audio content of words of thanks. By storing the interactive content uploaded by the creator, the creator expresses his/her different moods more flexibly, and the user has a more realistic interactive feeling with the creator more advantageously.

According to the method for displaying the interactive content provided by the embodiment of the present disclosure, after receiving the acquiring request for the interactive content, the interactive content corresponding to the preset function may be returned. Because the interactive content may show the feedback from the creator for the preset function, after the electronic device displays the interactive content, the user can intuitively feel, in real time, the feedback from the creator due to the user operation, so as to achieve real-time interaction between the user and the creator, thereby improving the real-time interactive effect between the user and the creator, and improving the real-time interactive experience of the user.

FIG. 5 is a block diagram of an apparatus for displaying interactive content shown according to an exemplary embodiment. Referring to FIG. 5, the apparatus includes:
a first receiving module 401, configured to receive an operation instruction for a display interface with different preset functions, wherein the preset functions are used to perform feedback on a creator or creation content of the creator;
a first determining module 402, configured to determine, based on the operation instruction, the preset function corresponding to the operation instruction;
an acquiring module 403, configured to acquire interactive content corresponding to the determined preset function, wherein the interactive content is used to show the feedback from the creator for the different preset functions; and
a display module 404, configured to display the interactive content.

As an optional implementation of the embodiment of the present disclosure, the acquiring module is further configured to:
acquire the interactive content uploaded by the creator from a server or locally, wherein the interactive content is corresponding to the preset function.

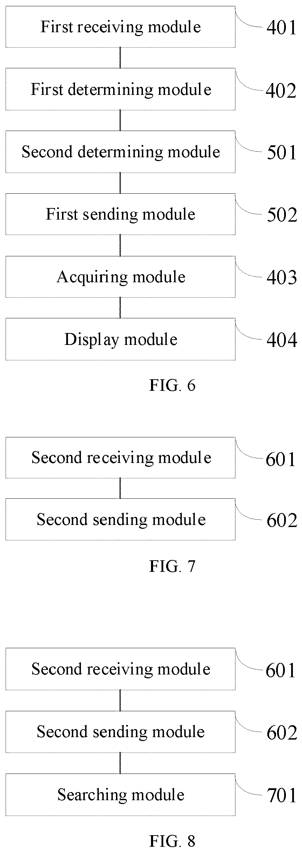

As an optional implementation of the embodiment of the present disclosure, as shown in FIG. 6, on the basis of an apparatus structure as shown in FIG. 5, the apparatus for displaying interactive content according to the embodiment of the present disclosure may further include:
a second determining module 501, configured to determine an identification number corresponding to the preset function after determining, based on the operation instruction, the preset function corresponding to the operation instruction; and
a first sending module 502, configured to send the identification number to the server.

As an optional implementation of the embodiment of the present disclosure, the display module is further configured to:
display the interactive content at a current UI of an electronic device.

As an optional implementation of the embodiment of the present disclosure, the preset functions include any combination of the following:
following the creator, unfollowing the creator, expressing admiration to the creator, expressing admiration to the creation content of the creator, or commenting the creation content of the creator.

As an optional implementation of the embodiment of the present disclosure, the interactive content includes any combination of the following:
a short video, a dynamic picture, a static picture or an audio content.

As an optional implementation of the embodiment of the present disclosure, the display module is further configured to:
display the interactive content at a profile picture of the creator in the current UI of the electronic device.

According to the apparatus for displaying interactive content provided by the embodiment of the present disclosure, after receiving the operation instruction for the display interface with different preset functions from the user, the electronic device can acquire the interactive content corresponding to the preset function. The interactive content may show the feedback from the creator for the preset function, the interactive content is further displayed, so that the user can intuitively feel, in real time, the feedback from the creator due to the user operation, thereby improving the real-time interactive effect between the user and the creator, and improving the real-time interactive experience of the user.

FIG. 7 is a block diagram of yet another apparatus for displaying interactive content shown according to an exemplary embodiment. Referring to FIG. 7, the apparatus includes:
a second receiving module 601, configured to receive an acquiring request for interactive content, wherein the interactive content is used to show feedback from a creator for different preset functions, and the preset functions are used to perform the feedback on the creator or creation content of the creator; and
a second sending module 602, configured to return the interactive content corresponding to the preset function.

As an optional implementation of the embodiment of the present disclosure, the preset functions include any combination of the following:
following the creator, unfollowing the creator, expressing admiration to the creator, expressing admiration to the creation content of the creator, or commenting the creation content of the creator; and
the interactive content includes any combination of the following:
   a short video, a dynamic picture, a static picture or an audio content.

As an optional implementation of the embodiment of the present disclosure, the acquiring request for the interactive content carries an identification number, and the identification number is used to distinguish the different preset functions. On the basis of an apparatus structure as shown in FIG. 7, as shown in FIG. 8, the apparatus for displaying interactive content according to the embodiment of the present disclosure may further include:
a searching module 701, configured to search the interactive content corresponding to the identification number after receiving the acquiring request for the interactive content.

According to the apparatus for displaying interactive content provided by the embodiment of the present disclosure, after receiving the acquiring request for the interactive content, the interactive content corresponding to the preset function may be returned. Because the interactive content may show the feedback from the creator for the different preset functions, after the electronic device displays the interactive content, the user can intuitively feel, in real time, the feedback from the creator due to the user operation, so as to achieve real-time interaction between the user and the creator, thereby improving the real-time interactive effect between the user and the creator, and improving the real-time interactive experience of the user.

With respect to the apparatus in the above embodiments, the specific manner of executing the operation by all the modules thereof has been described in detail in the embodiments related to the method, which will not be illustrated in detail here.

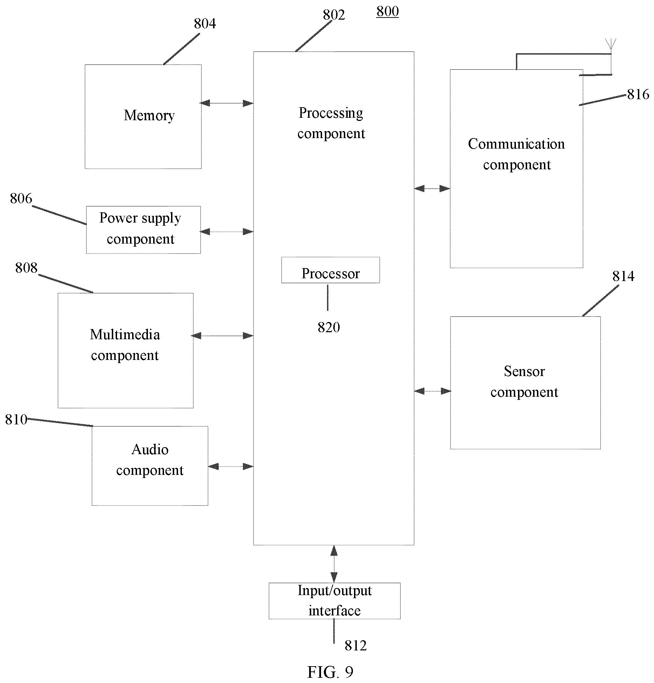

FIG. 9 is a block diagram of an apparatus 800 for interactive content display shown according to an exemplary embodiment. For example, the apparatus 800 may be a mobile phone, a computer, a digital broadcast terminal, a message receiving and sending device, a game console, a tablet device, a medical device, a fitness device, a personal digital assistant, etc.

Referring to FIG. 9, the apparatus 800 may include the following one or more components: a processing component 802, a memory 804, a power supply component 806, a multimedia component 808, an audio component 810, an input/output (I/O) interface 812, a sensor component 814 and a communication component 816.

The processing component 802 generally controls an overall operation of the apparatus 800, for example, operations associated with display, telephone call, data communication, camera operation and record operation. The processing component 802 may include one or more processors 820 to execute an instruction, so as to complete all or part of steps of the above method. In addition, the processing component 802 may include one or more modules, thereby facilitating interaction between the processing component 802 and other components. For example, the processing component 802 may include a multimedia module, so as to facilitate interaction between the multimedia component 808 and processing component 802.

The memory 804 is configured to store various types of data so as to support the operation on the apparatus 800. Examples of these data include an instruction of any application program or method used to be operated on the apparatus 800, a contact data, a telephone directory data, a message, a picture, a video, etc. The memory 804 may be achieved by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides electric power for various components of the apparatus 800. The power supply component 806 may include a power supply management system, one or more power supplies, and other components associated with generating, managing and distributing the electric power for the apparatus 800.

The multimedia component 808 includes a screen between the apparatus 800 and a user for proving an output interface. In some embodiments, the screen may include a liquid crystal display (LCD) and a touch panel (TP). If the screen includes the touch panel, the screen may be implemented as a touch screen so as to receive an input signal from the user. The touch panel includes one or more touch sensors so as to sense touch, slide and gestures on the touch panel. The touch sensor can not only sense the boundary of a touch or slide motion, but also detects the duration and pressure related to a touch or slide operation. In some embodiments, the multimedia component 808 includes a front camera and/or a rear camera. When the apparatus 800 is in an operation mode, such as a shooting mode or a video mode, the front camera and/or the rear camera may receive external multimedia data. Each front camera and rear camera may be a stationary optical lens system or has a focal length or an optical zoom capacity.

The audio component 810 is configured to output and/input an audio signal. For example, the audio component 810 includes a microphone (MIC). When the apparatus 800 is in an operation mode, such as a call mode, a record mode and a voice recognition mode, the microphone is configured to receive an external audio signal. The received audio signal may be further stored in the memory 804 or sent via the communication component 816. In some embodiments, the audio component 810 further includes a speaker, used to output the audio signal.

The I/O interface 812 provides an interface for a space between the processing component 802 and a peripheral interface module, and the above peripheral interface module may be a keyboard, a click wheel, buttons, etc. These buttons may include but not limited to: a home button, a volume button, a start button and a lock button.

The sensor component 814 includes one or more sensors, used to provide state evaluation in various aspects for the apparatus 800. For example, the sensor component 814 may detect an on/off state of the apparatus 800, and relative positioning of the component, for example, the component is a displayer and a keypad of the apparatus 800. The sensor component 814 may further detect position change of the apparatus 800 or one component of the apparatus 800, presence or absence of contact between the user and the apparatus 800, a direction or acceleration/deceleration of the apparatus 800, and temperature change of the apparatus 800. The sensor component 814 may include a proximity sensor, configured to detect presence of a nearby object when there is no any physical contact. The sensor component 814 may further include an optical sensor, such as a CMOS or CCD image sensor, used in an imaging application. In some embodiments, the sensor component 814 may further includes an acceleration sensor, a gyroscope sensor, a magnetic sensor, a pressure sensor, or a temperature sensor.

The communication component 816 is configured to facilitate wired or wireless communication between the apparatus 800 and other devices. The apparatus 800 may assess a wireless network based on a communication standard, such as WiFi, a service provider network (e.g. 2G, 3G, 4G or 5G), or their combination. In one exemplary embodiment, the communication component 816 receives a broadcast signal or broadcast related information from an external broadcast management system via a broadcast channel. In one exemplary embodiment, the communication component 816 further includes a near-field communication (NFC) module, so as to promote short-range communication.

In the exemplary embodiment, the apparatus 800 may be implemented by one or more application specific integrated circuits (ASIC), digital signal processors (DSP), digital signal processing devices (DSPD), programmable logic devices (PLD), field-programmable gate arrays (FPGA), controllers, microcontrollers, microprocessors or other electronic elements, and used to execute the any above method for displaying the interactive content.

In the exemplary embodiment, a non-transitory computer readable storage medium including an instruction is further provided, for example, a memory 804 including the instruction. The above instruction may be executed by a processor 820 of an apparatus 800 so as to complete the any above method for displaying the interactive content. For example, the non-transitory computer readable storage medium may be the ROM, a random access memory (RAM), a CD-ROM, a magnetic tape, a floppy disk, an optical data storage device, etc.

In another embodiment provided by the present disclosure, a computer program product including an instruction is further provided. When run on a computer, the computer program product enables the computer to execute any method for displaying the interactive content in the above embodiment.

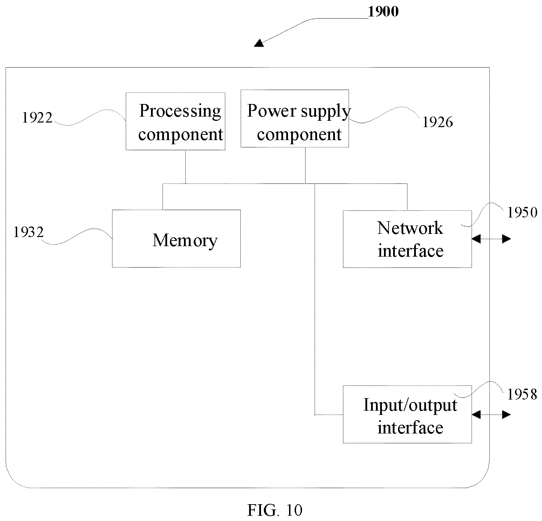

FIG. 10 is a block diagram of an apparatus 1900 for interactive content display shown according to an exemplary embodiment. For example, the apparatus 1900 may be provided as a server. Referring to FIG. 10, the apparatus 1900 includes a processing component 1922, which further includes one or more processors, and a memory resource represented by a memory 1932, used to store instructions capable of being executed by the processing component 1922, such as an application program. The application program stored in the memory 1932 may include one or more modules, wherein each module corresponds to a group of instructions. In addition, the processing component 1922 is configured to execute the instructions, so as to execute any above method for displaying the interactive content.

The apparatus 1900 may further include a power supply component 1926 configured to execute power supply management of the apparatus 1900, a wired or wireless network interface 1950 configured to connect the apparatus 1900 to the network, and an input/output (I/O) interface 1958. The apparatus 1900 may operate an operation system stored in the memory 1932, for example, Windows ServerTM, Mac OS XTM, UnixTM, LinuxTM, FreeBSDTM or similar.

Those skilled in the art will easily think of other implementation solutions of the present disclosure after considering the specification and practicing the disclosure disclosed here. The present disclosure aims at covering any modification, use or adaptive change of the present disclosure. These modifications, uses or adaptive changes follow the general principle of the present disclosure and include common general knowledge or conventional technical means in the technical field and not disclosed in the present disclosure. The specification and the embodiments are only regarded as examples, and the true scope and spirit of the present disclosure are pointed out by the below claim.

It should be understood that the present disclosure is not limited to the above precise structure described and shown in the accompanying drawings, and various variations and changes can be made without departing from its scope. The scope of the present disclosure is only limited by the appended claims.

In the text, the relational terms such as "first" and "second" are only used to distinguish one entity or operation with another entity or operation, and not always require or hint that any actual relationship or sequence exist between these entities or operations. The terms "include", "comprise" or any other variants intend to cover non-exclusive comprising, so that a process, a method, an article or a device including a series of elements not only include those elements, but also include other elements not clearly listed, or further include the inherent elements of the process, the method, the article or the device. In a case of no more limitations, the element limited by a sentient "includes a..." does not exclude that the other same element further exists in the process, the method, the article or the device including the element.

## Claims

1. A method for displaying interactive content, applied to an electronic device, and comprising:
receiving an operation instruction for a display interface with different preset functions, wherein the preset functions are used to perform feedback on a creator or creation content of the creator;
determining, based on the operation instruction, the preset function corresponding to the operation instruction;
acquiring interactive content corresponding to the determined preset function, wherein the interactive content is used to show the feedback from the creator for the different preset functions; and
displaying the interactive content.

2. The method according to claim 1, wherein said acquiring the interactive content corresponding to the determined preset function, comprises:
acquiring the interactive content uploaded by the creator from a server or locally, wherein the interactive content is corresponding to the preset function.

3. The method according to claim 2, wherein after said determining, based on the operation instruction, the preset function corresponding to the operation instruction, the method further comprises:
determining an identification number corresponding to the preset function; and
sending the identification number to the server.

4. The method according to any one of claims 1-3, wherein said displaying the interactive content comprises:
displaying the interactive content at a current user interface of the electronic device.

5. The method according to claim 4, wherein the preset functions comprise any combination of the following:
following the creator, unfollowing the creator, expressing admiration to the creator, expressing admiration to the creation content of the creator, or commenting the creation content of the creator.

6. The method according to claim 5, wherein the interactive content comprises any combination of the following:
a short video, a dynamic picture, a static picture or an audio content.

7. The method according to claim 5, wherein said displaying the interactive content at the current UI of the electronic device, comprises:
displaying the interactive content at a profile picture of the creator in the current UI of the electronic device.

8. A method for displaying interactive content, applied to a server, and comprising:
receiving an acquiring request for interactive content, wherein the interactive content is used to show feedback from a creator for different preset functions, and the preset functions are used to perform the feedback on the creator or creation content of the creator; and
sending the interactive content corresponding to the preset function.

9. The method according to claim 8, wherein the preset functions comprise any combination of the following:
following the creator, unfollowing the creator, expressing admiration to the creator, expressing admiration to the creation content of the creator, or commenting the creation content of the creator; and
the interactive content comprises any combination of the following:
a short video, a dynamic picture, a static picture or an audio content.

10. The method according to claim 8, wherein said acquiring request for the interactive content carries an identification number, the identification number is used to distinguish the different preset functions, and after said receiving the acquiring request for the interactive content, the method further comprises:
searching the interactive content corresponding to the identification number.

11. An apparatus for displaying interactive content, comprising:
a first receiving module, configured to receive an operation instruction for a display interface with different preset functions, wherein the preset functions are used to perform feedback on a creator or creation content of the creator;
a first determining module, configured to determine, based on the operation instruction, the preset function corresponding to the operation instruction;
an acquiring module, configured to acquire interactive content corresponding to the determined preset function, wherein the interactive content is used to show the feedback from the creator for the different preset functions; and
a display module, configured to display the interactive content.

12. The apparatus according to claim 11, wherein the acquiring module is further configured to:
acquire the interactive content uploaded by the creator from a server or locally, wherein the interactive content is corresponding to the preset function.

13. The apparatus according to claim 12, further comprising:
a second determining module, configured to determine an identification number corresponding to the preset function after determining, based on the operation instruction, the preset function corresponding to the operation instruction; and
a first sending module, configured to send the identification number to the server.

14. The apparatus according to any one of claims 11-13, wherein the display module is further configured to:
display the interactive content at a current user interface of an electronic device.

15. The apparatus according to claim 14, wherein the preset functions comprise any combination of the following:
following the creator, unfollowing the creator, expressing admiration to the creator, expressing admiration to the creation content of the creator, or commenting the creation content of the creator.

16. The apparatus according to claim 15, wherein the interactive content comprises any combination of the following:
a short video, a dynamic picture, a static picture or an audio content.

17. The apparatus according to claim 15, wherein the display module is further configured to:
display the interactive content at a profile picture of the creator in the current UI of the electronic device.

18. An apparatus for displaying interactive content, comprising:
a second receiving module, configured to receive an acquiring request for interactive content, wherein the interactive content is used to show feedback from a creator for different preset functions, and the preset functions are used to perform the feedback on the creator or creation content of the creator; and
a second sending module, configured to send the interactive content corresponding to the preset function.

19. The apparatus according to claim 18, wherein the preset functions comprise any combination of the following: following the creator, unfollowing the creator, expressing admiration to the creator, expressing admiration to the creation content of the creator, o commenting the creation content of the creator; and
the interactive content comprises any combination of the following:
a short video, a dynamic picture, a static picture or an audio content.

20. The apparatus according to claim 18, wherein the acquiring request for the interactive content carries an identification number, the identification number is used to distinguish the different preset functions, and the apparatus further comprises:
a searching module, configured to search the interactive content corresponding to the identification number after receiving the acquiring request for the interactive content.

21. An electronic device, comprising:
a processor; and
a memory used to store instructions executable by the processor; wherein
the processor is configured to execute the instructions to:
receive an operation instruction for a display interface with different preset functions, wherein the preset functions are used to perform feedback on a creator or creation content of the creator;
determine, based on the operation instruction, the preset function corresponding to the operation instruction;
acquire interactive content corresponding to the determined preset function, wherein the interactive content is used to show the feedback from the creator for the different preset functions; and
display the interactive content.

22. The electronic device according to claim 21, wherein the processor is further configured to:
acquire the interactive content uploaded by the creator from a server or locally, wherein the interactive content is corresponding to the preset function.

23. The electronic device according to claim 22, wherein the processor is further configured to:
determine an identification number corresponding to the preset function after determining, based on the operation instruction, the preset function corresponding to the operation instruction; and
send the identification number to the server.

24. The electronic device according to any one of claims 21-23, wherein the processor is further configured to:
display the interactive content at a current user interface of the electronic device.

25. The electronic device according to claim 24, wherein the preset functions comprise any combination of the following:
following the creator, unfollowing the creator, expressing admiration to the creator, expressing admiration to the creation content of the creator, or commenting the creation content of the creator.

26. The electronic device according to claim 25, wherein the interactive content comprises any combination of the following:
a short video, a dynamic picture, a static picture or an audio content.

27. The electronic device according to claim 25, wherein the processor is further configured to:
display the interactive content at a profile picture of the creator in the current UI of the electronic device.

28. An electronic device, comprising:
a processor; and
a memory used to store instructions executable by the processor; wherein
the processor is configured to execute the instructions to:
receive an acquiring request for an interactive content, wherein the interactive content is used to show feedback from a creator for different preset functions, and the preset functions are used to perform the feedback on the creator or creation content of the creator; and
send the interactive content corresponding to the preset function.

29. The electronic device according to claim 28, wherein the preset functions comprise any combination of the following:
following the creator, unfollowing the creator, expressing admiration to the creator, expressing admiration to the creation content of the creator, or commenting the creation content of the creator; and
the interactive content comprises any combination of the following:
a short video, a dynamic picture, a static picture or an audio content.

30. The electronic device according to claim 28, wherein the acquiring request for the interactive content carries an identification number, the identification number is used to distinguish the different preset functions, and the processor is further configured to:
search the interactive content corresponding to the identification number after receiving the acquiring request for the interactive content.

31. A non-transitory computer readable storage medium, wherein when executed by a processor of an electronic device, an instruction in the storage medium enables the electronic device to execute the method for displaying the interactive content according to any one of claims 1-7.

32. A non-transitory computer readable storage medium, wherein when executed by a processor of a server, an instruction in the storage medium enables the server to execute the method for displaying the interactive content according to any one of claims 8-10.
